# DEMANDE DE BREVET EUROPEEN

(11) **EP 4 624 778 A1**
(43) Date de publication de la demande: **01.10.2025**
(21) Numéro de dépôt: 25164838.2
(22) Date de dépôt: 19.03.2025
(51) Int. Cl.: F16F 15/131

(54) **AMORTISSEUR DE TORSION**

(30) Priorité: 26.03.2024 FR 2403060
(71) Demandeur: VALEO EMBRAYAGES, 80009 Amiens (FR)
(72) Inventeur: CIMA, Massimo, 12084 Mondovi (IT); CALANDRI, Fabrizio, 38070 ST Quentin Fallavier (FR); GUIDI, Martina, 12084 Mondovi (IT); BOETTI, Daniele, 12084 Mondovi (IT); LOMUSCIO, Gianmarco, 12084 Mondovi (IT)
(74) Mandataire: Valeo Powertrain Systems

(57) **Abrégé**

Amortisseur de torsion (1) pour dispositif de transmission de couple comprenant :
- un élément d'entrée de couple (2) et un élément de sortie de couple (3) mobiles en rotation autour d'un axe de rotation (X) ;
- des organes élastiques (4) couplant élastiquement en rotation l'élément d'entrée de couple à l'élément de sortie de couple ; et
- un voile (5) configuré pour coopérer avec les organes élastiques, le voile comprenant une pluralité de couches (51,52) empilées axialement, chaque couche comportant au moins deux bras d'entraînement (521, 521) s'étendant radialement pour se positionner circonférentiellement entre deux organes élastiques, les couches étant reliées ensemble par leurs bras d'entraînement par un moyen de liaison (6).

## Description

### Domaine technique

La présente invention se rapporte au domaine des dispositifs de transmission de couple du type amortisseurs de torsion notamment destinés à être disposé dans la chaîne de transmission d'un véhicule, entre un moteur à combustion interne et une boîte de vitesses.

### Arrière-plan technologique

Les moteurs à explosions ne génèrent pas un couple constant et présentent des acyclismes provoqués par les explosions se succédant dans leurs cylindres. Ces acyclismes génèrent des vibrations qui sont susceptibles de se transmettre à la boîte de vitesses et d'engendrer ainsi des chocs, bruits et nuisances sonores, particulièrement indésirables. Afin de diminuer les effets indésirables des vibrations et améliorer le confort de conduite des véhicules automobiles, il est connu d'équiper les transmissions de véhicule automobile avec des amortisseurs de torsion. De tels amortisseurs de torsion équipent notamment les doubles volants amortisseurs (DVA), les frictions d'embrayage, ou les embrayages de verrouillage pour convertisseurs de couple, également appelés embrayages « lock-up ».

Les doubles volants amortisseurs comportent généralement un volant d'inertie primaire et un volant d'inertie secondaire mobiles en rotation l'un par rapport à l'autre et couplés élastiquement entre eux par des organes élastiques. L'entraînement en rotation des organes élastiques est réalisé via un voile. Le voile comprend une partie annulaire centrale fixée au volant d'inertie secondaire et des bras d'entraînement qui s'étendent radialement vers l'extérieur pour venir appuyer sur les extrémités des organes élastiques.

Le document DE102004024747 divulgue un double volant amortisseur où le voile est réalisé par une structure composée de plusieurs disques empilés axialement et reliés entre eux dans leur partie annulaire centrale par des rivets. Cette structure de disques empilés, par l'utilisation de plusieurs disques de géométrie identiques, permet de réaliser le voile par un procédé plus simple et économique qu'un voile de structure monobloc.

Les documents WO2024003269A1 et DE102016216989A1 divulguent également un double volant amortisseur où le voile est réalisé par une structure composée de plusieurs disques empilés axialement.

Toutefois, une telle structure de voile composée de disques empilés reliés entre eux par leur partie annulaire centrale pose plusieurs problèmes techniques, notamment une tenue mécanique insuffisante due en premier lieu à une déformation excessive des bras d'entraînement sous des sollicitations de surcouple pouvant être générées dans la chaîne de transmission, et en second lieu à une dégradation de la qualité d'appui des bras d'entraînements sur les organes élastiques du fait des défauts de positionnement des disques entre eux.

### Résumé

Dans tout ce qui suit, les adjectifs numéraux ordinaux sont utilisés pour différencier les caractéristiques. Ils ne définissent pas la position d'une caractéristique. Par conséquent, par exemple, une troisième caractéristique d'un produit ne signifie pas que le produit possède une première et/ou une deuxième caractéristique.

Une idée à la base de l'invention est un amortisseur de torsion qui permet de résoudre un ou plusieurs problèmes techniques de l'art antérieur, par exemple les problèmes susmentionnés.

L'invention concerne un amortisseur de torsion pour dispositif de transmission de couple, notamment pour une chaîne de transmission de véhicule, l'amortisseur de torsion comprenant :
- un élément d'entrée de couple et un élément de sortie de couple mobiles en rotation l'un par rapport l'autre autour d'un axe de rotation ;
- des organes élastiques couplant élastiquement en rotation l'élément d'entrée de couple à l'élément de sortie de couple ; et
- un voile configuré pour coopérer en rotation avec les organes élastiques ;

le voile comprenant une pluralité de couches empilées axialement, la pluralité de couches comprenant une première couche comportant au moins deux premiers bras d'entraînement et une deuxième couche comportant au moins deux deuxièmes bras d'entraînement, les au moins deux premiers bras d'entraînement et les au moins deux deuxièmes bras d'entraînement s'étendant radialement pour se positionner circonférentiellement entre deux organes élastiques, les au moins deux premiers bras d'entraînement étant reliés avec les au moins deux deuxièmes bras d'entraînement par un moyen de liaison ;
le moyen de liaison étant positionné radialement de telle sorte qu'une surface cylindrique circulaire ayant pour axe de révolution l'axe de rotation traverse à fois le moyen de liaison et les organes élastiques, et
la première couche comportant en outre une première zone de connexion et la deuxième couche comportant en outre une deuxième zone de connexion, la première zone de connexion et la deuxième zone de connexion étant configurées pour être fixées sur l'élément d'entrée de couple ou sur l'élément de sortie de couple.

L'invention concerne un amortisseur de torsion pour dispositif de transmission de couple, notamment pour une chaîne de transmission de véhicule, l'amortisseur de torsion comprenant :
- un élément d'entrée de couple et un élément de sortie de couple mobiles en rotation l'un par rapport l'autre autour d'un axe de rotation ;
- des organes élastiques couplant élastiquement en rotation l'élément d'entrée de couple à l'élément de sortie de couple ; et
- un voile configuré pour coopérer en rotation avec les organes élastiques ;
le voile comprenant une pluralité de couches empilées axialement, la pluralité de couches comprenant une première couche comportant au moins deux premiers bras d'entraînement et une deuxième couche comportant au moins deux deuxièmes bras d'entraînement, les au moins deux premiers bras d'entraînement et les au moins deux deuxièmes bras d'entraînement s'étendant radialement pour se positionner circonférentiellement entre deux organes élastiques, les au moins deux premiers bras d'entraînement étant reliés avec les au moins deux deuxièmes bras d'entraînement par un moyen de liaison.

Cette structure de voile composée de plusieurs couches empilées rend le procédé d'obtention du voile simple et économique par la possibilité d'utiliser pour chaque couche une tôle de faible épaisseur, ce qui la rend facile à découper et nécessitant un outillage de découpe, par exemple un outillage de découpe par presse, moins cher et moins complexe qu'un outillage de découpe utilisé dans le cas d'un voile monobloc de forte épaisseur.

La liaison par un moyen de liaison des au moins deux premiers bras d'entraînement avec les au moins deux deuxièmes bras d'entraînement permet d'augmenter la résistance mécanique sous couple du voile. En effet, en contraignant les bras d'entraînement à travailler mécaniquement ensemble, cette liaison a pour effet d'augmenter la raideur en flexion et donc de diminuer significativement les déformations sous couple.

La liaison par un moyen de liaison des au moins deux premiers bras d'entraînement avec les au moins deux deuxièmes bras d'entraînement présente en outre l'avantage de relier les bras d'entraînement dans une zone située à proximité immédiate des organes élastiques. Ainsi les défauts de positionnement relatifs des bras d'entraînement sont réduits, ce qui permet d'assurer un contact simultané de tous les bras d'entraînement avec les organes élastiques, garantissant ainsi une bonne qualité d'appui.

Enfin, la liaison par un moyen de liaison des au moins deux premiers bras d'entraînement avec les au moins deuxièmes bras d'entraînement permet de réunir les couches empilées dans un seul sous-ensemble, ce qui rend la manipulation et l'assemblage du voile plus aisé dans les différentes étapes de fabrication de l'amortisseur de torsion.

Au sens de la présente demande :
- « axialement » signifie « parallèlement à l'axe de rotation » ;
- « radialement » signifie « le long d'un axe appartenant à un plan orthogonal à l'axe de rotation et coupant cet axe de rotation » ;
- « circonférentiellement » signifie « autour de l'axe de rotation » ;

Selon une caractéristique supplémentaire de l'invention, le moyen de liaison lie d'une part un des au moins deux premiers bras d'entraînement de la première couche à un des au moins deux deuxièmes bras d'entraînement de la deuxième couche, et d'autre part un autre des au moins deux premiers bras d'entraînement de la première couche à un autre des au moins deuxièmes bras d'entraînement de la deuxième couche.

Selon une caractéristique supplémentaire de l'invention, la pluralité de couches empilées axialement sont liées ensemble par le moyen de liaison distinctement et indépendamment de l'élément d'entrée de couple et de l'élément de sortie de couple.

Autrement dit, le moyen de liaison sert uniquement à lier les couches empilées ensemble, aucun autre composant n'est lié aux couches empilées par ledit moyen de liaison.

Selon une caractéristique supplémentaire de l'invention, le moyen de liaison est une fixation rigide.

On entend par fixation rigide, une fixation qui permet d'immobiliser l'au moins première couche avec l'au moins deuxième couche.

Selon une caractéristique supplémentaire de l'invention, le moyen de liaison est une liaison par rivetage.

La liaison par rivetage présente l'avantage d'être un processus d'assemblage simple et économique à mettre en œuvre. De plus, l'écrasement axial des rivets pendant l'opération de rivetage induit une déformation radiale progressive des rivets à l'intérieur des trous aménagés dans les bras d'entraînements, ce qui provoque au final un centrage et un alignement entre elles des couches du voile.

Selon une caractéristique supplémentaire de l'invention, le moyen de liaison est une liaison par soudage, notamment une liaison par soudage par résistance électrique ou par soudage laser, notamment par soudage laser par transparence.

La liaison par soudage présente l'avantage qu'aucun composant supplémentaire n'est nécessaire pour réaliser la liaison des bras d'entraînement. Ceci permet un gain en termes de coût mais aussi permet un encombrement plus compact axialement, particulièrement dans les cas du soudage par résistance électrique (appelé aussi soudage par point) ou du soudage laser dont les procédés de soudage ne nécessitent pas d'apport de matière.

Selon une caractéristique supplémentaire de l'invention, le moyen de liaison est une liaison par collage ou par sertissage ou par vissage ou par clinchage.

Selon une caractéristique supplémentaire de l'invention, le moyen de liaison est une liaison par un matériau non métallique à capacité d'absorption des vibrations, notamment un matériau élastomère.

Selon une caractéristique supplémentaire de l'invention, le moyen de liaison est positionné radialement de telle sorte qu'une surface cylindrique circulaire ayant pour axe de révolution l'axe de rotation traverse à fois le moyen de liaison et les organes élastiques.

Selon une caractéristique supplémentaire de l'invention, la première couche et la deuxième couche sont en acier ayant subi un traitement de durcissement, notamment un traitement de durcissement permettant d'obtenir une dureté superficielle de 300 à 800 HV.

Selon une caractéristique supplémentaire de l'invention, la première couche et la deuxième couche sont chacune réalisées à partir d'une tôle d'acier ayant une épaisseur constante, notamment d'une tôle d'acier ayant une épaisseur constante comprise entre 0,8 et 3 mm.

Pour obtenir la forme de chaque couche, la tôle d'acier subit un procédé de découpe et éventuellement de pliage. Ce procédé n'engendrant pas de modification d'épaisseur, l'épaisseur de la couche s'avère donc sensiblement égale à l'épaisseur de la tôle d'acier. Si des amincissements locaux d'épaisseur viendraient à être réalisés, ceux-ci ne sont pas à considérer pour mesurer l'épaisseur de la couche.

Selon une caractéristique supplémentaire de l'invention, le nombre de couches est compris entre 2 et 7.

Ces trois dernières caractéristiques permettent de réduire le coût et la masse du voile par le fait qu'une tôle d'épaisseur faible qui a subi un traitement de durcissement présente une résistance mécanique jusqu'à 25% plus importante qu'une tôle d'épaisseur plus forte ayant subi le même traitement de durcissement. Par exemple, un voile monobloc ayant une épaisseur de 5 mm peut être avantageusement remplacé par un voile comportant 4 couches empilées ayant chacune une épaisseur de 1 mm.

Selon une caractéristique supplémentaire de l'invention, chaque couche comporte entre 2 et 6 bras d'entraînements.

Selon une caractéristique supplémentaire de l'invention, la première couche comporte en outre une première zone de connexion et la deuxième couche comporte en outre une deuxième zone de connexion, la première zone de connexion et la deuxième zone de connexion étant configurées pour être fixées sur l'élément d'entrée de couple ou sur l'élément de sortie de couple.

Ainsi, les zones de connexion permettent d'assurer une liaison mécanique entre les couches du voile et l'élément d'entrée de couple ou l'élément de sortie de couple sur lequel elles sont fixées. Les zones de connexion peuvent comporter notamment des trous dans lesquels sont insérés les rivets de fixation et/ou des surfaces d'appui axial.

Selon une caractéristique supplémentaire de l'invention, la première zone de connexion et la deuxième zone de connexion sont axialement en contact et sont fixées ensemble sur l'élément d'entrée de couple ou sur l'élément de sortie de couple.

Selon un premier aspect de l'invention, les au moins deux premiers bras d'entraînement s'étendent radialement vers l'extérieur par rapport à la première zone de connexion et les au moins deux deuxièmes bras d'entraînement s'étendent radialement vers l'extérieur par rapport à la deuxième zone de connexion.

Selon un autre aspect de l'invention, les au moins deux premiers bras d'entraînement s'étendent radialement vers l'intérieur par rapport à la première zone de connexion et les au moins deux deuxièmes bras d'entraînement s'étendent radialement vers l'intérieur par rapport à la deuxième zone de connexion.

Selon une caractéristique supplémentaire de l'invention, les au moins deux premiers bras d'entraînement et/ou les au moins deux deuxièmes bras d'entraînement sont reliés ensemble par un bandeau de matière s'étendant circonférentiellement, ledit bandeau de matière étant positionné radialement à l'extérieur et/ou à l'intérieur des au moins deux premiers bras d'entraînement et des au moins deux deuxièmes bras d'entraînement.

Selon une caractéristique supplémentaire de l'invention, la première couche et la deuxième couche sont segmentées circonférentiellement en une pluralité de segments, chaque segment s'étendant circonférentiellement sur un premier angle, notamment un premier angle compris entre 15° et 220°.

Les couches segmentées circonférentiellement permettent de réduire la quantité de matière mise en œuvre pour la fabrication du voile. En effet, la segmentation permet d'optimiser la position relative de plusieurs couches segmentées dans une bande de tôle dans laquelle elles sont découpées afin de limiter la largeur de ladite bande de tôle ainsi que réduire des chutes de matière occasionnées.

Selon une caractéristique supplémentaire de l'invention, la première couche et la deuxième couche s'étendent circonférentiellement sur un deuxième angle compris entre 195° et 360°, de préférence sur un deuxième angle compris entre 195° et 270°.

Cette dernière caractéristique est une solution alternative pour réduire la quantité de matière mise en œuvre pour la fabrication du voile.

Selon un aspect de l'invention, la première couche et la deuxième couche sont plates.

Les couches plates permettent de réduire le coût et faciliter la fabrication car la géométrie des couches peut être obtenue par une simple et unique opération de découpe des contours extérieurs à partir d'une tôle métallique.

Selon un autre aspect de l'invention, les au moins deux premiers bras d'entrainement sont décalés axialement entre eux d'une distance axiale, et les au moins deux deuxièmes bras d'entrainement sont décalés axialement entre eux de ladite distance axiale, de sorte que la première couche et la deuxième couche sont imbriquées axialement.

Cette dernière caractéristique permet d'obtenir une structure de voile comportant des couches qui séparément s'étendent circonférentiellement sur un deuxième angle compris entre 195° et 270°, et qui assemblées entre elles de manière imbriquées axialement apportent une couverture sur un angle total de 360° des zones de connexion sur l'élément d'entrée de couple ou sur l'élément de sortie de couple, permettant ainsi une fixation rigide et robuste du voile.

Selon une caractéristique supplémentaire de l'invention, la distance axiale est égale à l'épaisseur de la tôle à partir de laquelle sont réalisées la première couche et la deuxième couche.

Ainsi, la première zone de connexion et la deuxième zone de connexion se trouvent sur un même plan axial, ce qui facilite la fixation du voile sur l'élément d'entrée de couple ou l'élément de sortie de couple.

Selon une caractéristique supplémentaire de l'invention, la première couche et la deuxième couche sont de géométrie identique.

Cette dernière caractéristique permet de réduire le coût grâce à la standardisation de la fabrication du voile. Les couches empilées du voile étant de géométrie identique, il est possible d'utiliser la même géométrie de couche sur plusieurs applications véhicule différentes, en adaptant le nombre de couches en fonction de la capacité en couple requise pour chaque application véhicule.

Selon un aspect de l'invention, les organes élastiques de l'amortisseur de torsion sont des ressorts hélicoïdaux droits.

Selon un autre aspect de l'invention, les organes élastiques de l'amortisseur de torsion sont des ressorts hélicoïdaux courbes.

Selon un autre aspect de l'invention, les organes élastiques de l'amortisseur de torsion sont des ressorts hélicoïdaux agencés en série.

Selon un autre aspect de l'invention, les organes élastiques de l'amortisseur de torsion sont des ressorts hélicoïdaux agencés en série, le voile étant configuré pour assurer le phasage du mouvement de rotation autour de l'axe de rotation desdits ressorts hélicoïdaux agencés en série.

Ces quatre dernières caractéristiques permettent de pouvoir adapter le type de ressorts en fonction de la raideur torsionnelle visée pour l'amortisseur de torsion afin d'assurer une filtration suffisante des oscillations de torsion.

Selon une caractéristique supplémentaire de l'invention, l'amortisseur de torsion comprend un dispositif d'amortissement pendulaire.

Selon une caractéristique supplémentaire de l'invention, l'amortisseur de torsion comprend un dispositif d'amortissement pendulaire supporté par le voile.

Selon une caractéristique supplémentaire de l'invention, l'amortisseur de torsion comprend un dispositif d'amortissement pendulaire supporté par le voile, le dispositif d'amortissement pendulaire comprenant un corps pendulaire comportant deux masses oscillantes disposées axialement de part et d'autre du voile, les deux masses oscillantes étant appariées entre elles par au moins une entretoise, l'au moins entretoise passant axialement dans une première ouverture aménagée dans l'au moins première couche et dans une deuxième ouverture aménagée dans l'au moins deuxième couche.

Selon une caractéristique supplémentaire de l'invention, l'amortisseur de torsion est un double volant amortisseur comprenant une masse primaire comportant l'élément d'entrée de couple sous la forme d'un volant d'inertie primaire destiné à être entrainé en rotation par un arbre menant, une masse secondaire comportant le voile et l'élément de sortie de couple sous la forme d'un volant d'inertie secondaire ou d'un moyeu apte à coopérer, directement ou via un embrayage, avec un arbre mené, et les organes élastiques sous la forme d'une pluralité de ressorts couplant élastiquement en rotation la masse primaire et la masse secondaire.

L'invention concerne en outre un dispositif de transmission de couple, notamment pour une chaîne de transmission de véhicule, comprenant un amortisseur de torsion tel que défini précédemment et un embrayage.

### Brève description des figures

La figure 1 est une vue en coupe brisée d'un amortisseur de torsion suivant un premier mode de réalisation de l'invention.
La figure 2 est une vue en perspective coupée d'un amortisseur de torsion suivant le premier mode de réalisation de l'invention.
La figure 3 est une vue partielle en perspective d'un amortisseur de torsion suivant le premier mode de réalisation de l'invention.
La figure 4 est une vue en perspective d'un voile d'un amortisseur de torsion suivant le premier mode de réalisation de l'invention.
La figure 5 est une vue en perspective d'un voile d'un amortisseur de torsion suivant un deuxième mode de réalisation de l'invention.
La figure 6 est une vue en perspective d'un voile d'un amortisseur de torsion suivant un troisième mode de réalisation de l'invention.
La figure 7 est une vue en perspective d'un voile d'un amortisseur de torsion suivant un quatrième mode de réalisation de l'invention.
La figure 8 est une vue en perspective d'une couche d'un voile d'un amortisseur de torsion suivant le quatrième mode de réalisation de l'invention.
La figure 9 est une vue de côté d'une couche d'un voile d'un amortisseur de torsion suivant le quatrième mode de réalisation de l'invention.
La figure 10 est une vue de face d'une couche de voile d'un amortisseur de torsion suivant le quatrième mode de réalisation de l'invention.

### Description des modes de réalisation

Sur toutes les figures, les éléments identiques ou assurant la même fonction portent les mêmes numéros de référence. Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou interchangées pour fournir d'autres réalisations.

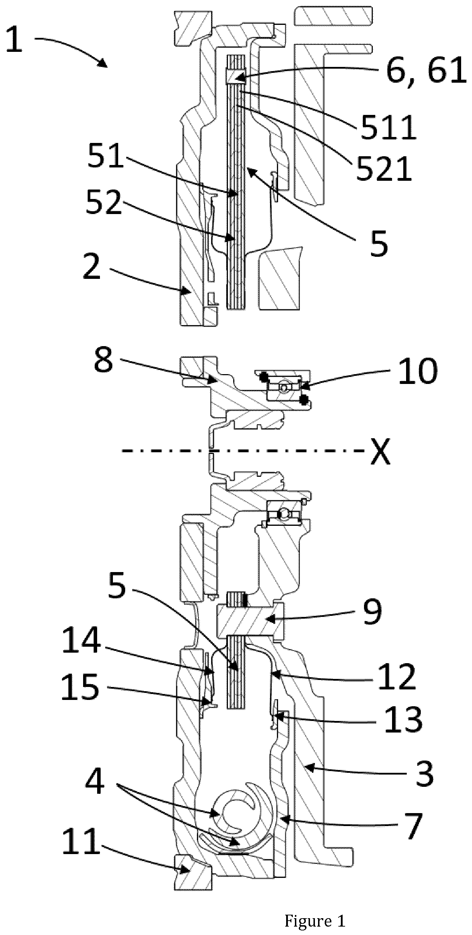

Les figures 1 à 3 représentent un amortisseur de torsion 1 selon un premier mode de réalisation de l'invention. L'amortisseur de torsion 1 est ici un double volant amortisseur comprenant une masse primaire et une masse secondaire. L'amortisseur de torsion 1 comprend un élément d'entrée de couple 2, ici sous la forme d'un volant d'inertie primaire 2, destiné à être fixé à l'extrémité d'un arbre menant, tel un vilebrequin d'un moteur à combustion, non représenté. L'amortisseur de torsion 1 comprend un élément de sortie de couple 3, ici sous la forme d'un volant d'inertie secondaire 3 destiné à recevoir un embrayage lié en rotation à l'arbre d'entrée d'une boîte de vitesses, non représentés. Cette configuration d'amortisseur de torsion est adaptée à une chaîne de transmissions d'un véhicule thermique pourvu d'une boîte de vitesses manuelle.

Dans un autre mode de réalisation de l'invention non représenté, l'élément de sortie de couple 3 de l'amortisseur de torsion 1 peut être sous la forme d'un moyeu comportant une cannelure interne liée en rotation à l'arbre d'entrée d'une boîte de vitesses. Cette configuration d'amortisseur de torsion est notamment adaptée à une chaîne de transmissions d'un véhicule hybride.

Dans le premier mode de réalisation des figures 1 à 3, la masse primaire est composée du volant d'inertie primaire 2 sur lequel est fixé, notamment par un procédé de soudure, un couvercle 7. Ainsi, le volant d'inertie primaire 2 et le couvercle 7 peuvent être agencés pour délimiter une chambre apte à recevoir des organes élastiques 4 et pour renfermer un lubrifiant, de préférence de la graisse ou de l'huile. En outre, le volant d'inertie primaire 2 peut porter, sur sa périphérie extérieure, une couronne dentée 11 pour l'entraînement en rotation de la masse primaire à l'aide d'un démarreur.

Dans le premier mode de réalisation des figures 1 à 3, la masse secondaire est composée du volant d'inertie secondaire 3 sur lequel peut être fixé, via des rivets secondaires 9, un voile 5 configuré pour coopérer en rotation avec les organes élastiques 4. La masse secondaire peut comporter également une première rondelle d'étanchéité 12 et une deuxième d'étanchéité 14 fixées axialement de part et d'autre du voile 5 via les rivets secondaires 9 et s'étendant radialement vers l'extérieur pour venir frotter sur le couvercle 7. Ainsi constituées, la première rondelle d'étanchéité 12 et la deuxième d'étanchéité 14 peuvent assurer le maintien du lubrifiant dans la chambre de la masse primaire. Afin de limiter le frottement et l'usure, une première rondelle de frottement 13 et une deuxième rondelle de frottement 15, de préférence en matière plastique, peuvent être disposées entre le couvercle 7 et la première rondelle d'étanchéité 12 et la deuxième d'étanchéité 14 respectivement.

Le volant d'inertie primaire 2 et le volant d'inertie secondaire 3 sont mobiles en rotation l'un par rapport l'autre autour d'un axe de rotation X. Afin d'assurer leur guidage en rotation, un palier 10, par exemple sous la forme d'un roulement à billes ou d'un palier lisse, peut être disposé entre un moyeu primaire 8 fixé sur la partie radialement interne du volant d'inertie primaire 2 et le volant d'inertie secondaire 3.

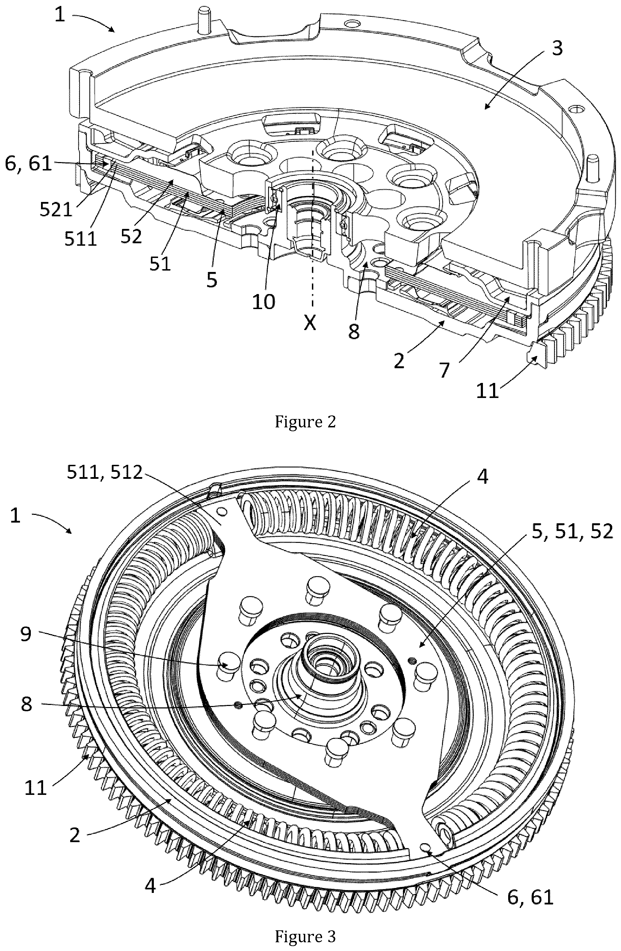

Les organes élastiques 4 couplent élastiquement en rotation le volant d'inertie primaire 2 et le volant d'inertie secondaire 3. Comme illustré en figure 3, les organes élastiques 4 peuvent être formés par un premier jeu de deux ressorts courbes concentriques et par un deuxième jeu de deux ressorts courbes concentriques. Chacune des premières extrémités du premier jeu et du deuxième jeu est montée en appui circonférentiellement contre le volant d'inertie primaire 2 et le couvercle 7, et chacune des deuxièmes extrémités du premier jeu et du deuxième jeu est montée en appui circonférentiellement contre le voile 5.

Dans un autre mode de réalisation de l'invention non représenté, les organes élastiques 4 peuvent être formés par un nombre de jeux de ressorts supérieur à deux, par exemple un nombre de jeux de ressorts égal à trois ou quatre. Dans un autre mode de réalisation de l'invention non représenté, les ressorts peuvent être des ressorts hélicoïdaux droits, notamment des ressorts hélicoïdaux droits travaillant en série.

Dans les différents modes de réalisation selon l'invention des figures 1 à 7, le voile 5 comprend une pluralité de couches 51, 52 empilées axialement, la pluralité de couches comprenant une première couche 51 comportant au moins deux premiers bras d'entraînement 511 et une deuxième couche 52 comportant au moins deux deuxièmes bras d'entraînement 521, les au moins deux premiers bras d'entraînement 511 et les au moins deux deuxièmes bras d'entraînement 521 s'étendant radialement pour se positionner circonférentiellement entre deux organes élastiques 4, les au moins deux premiers bras d'entraînement 511 étant reliés avec les au moins deux deuxièmes bras d'entraînement 521 par un moyen de liaison 6. Le moyen de liaison 6 est positionné radialement de telle sorte qu'une surface cylindrique circulaire ayant pour axe de révolution l'axe de rotation X traverse à fois le moyen de liaison 6 et les organes élastiques 4. La pluralité de couches 51,52 empilées axialement sont liées ensemble par le moyen de liaison 6 distinctement et indépendamment du volant d'inertie secondaire 3.

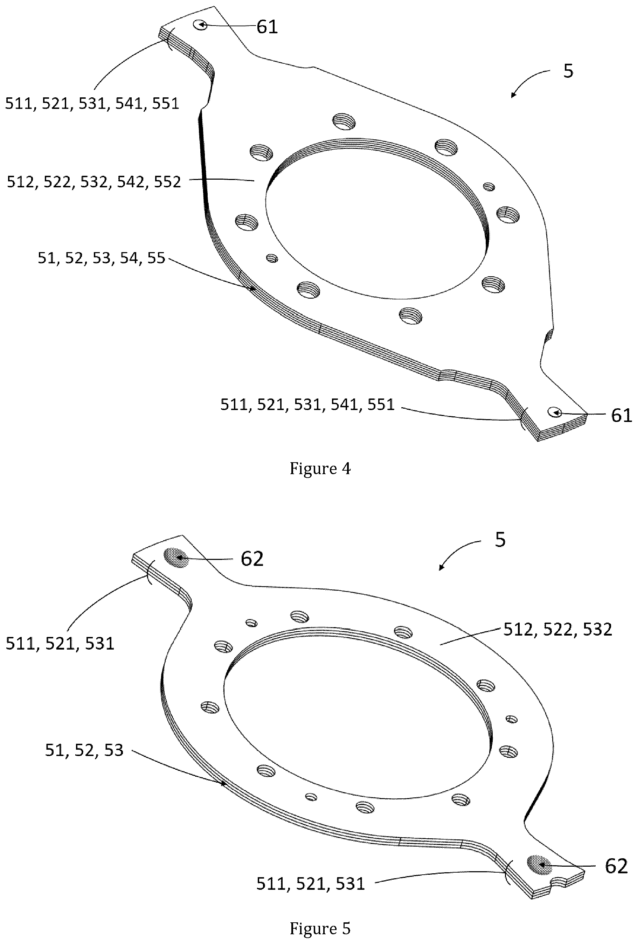

Comme illustré notamment sur la figure 4, les couches 51, 52, 53, 54, 55 du voile 5 peuvent comporter en outre des zones de connexion 512, 522, 532, 542 ,552 configurées pour être fixées sur le volant d'inertie secondaire 3. Les zones de connexion 512, 522, 532, 542 ,552 peuvent comprendre des trous circulaires dans lesquels sont insérés les rivets secondaires 9. Les zones de connexion 512, 522, 532, 542,552 peuvent comprendre également des surfaces d'appui axial sur le volant d'inertie secondaire 3.

Selon une variante de réalisation non illustrée, les couches du voile 5 ne sont pas fixées au volant d'inertie secondaire 3 mais mobile en rotation par rapport audit volant d'inertie secondaire 3 et le couple est transmis entre le voile 5 et le volant d'inertie secondaire 3 par un ou plusieurs étages supplémentaires d'organes élastiques.

Comme illustré dans le premier mode de réalisation de l'invention de la figure 4, le voile 5 peut comprendre cinq couches 51, 52, 53, 54 ,55 de géométries identiques. Les cinq couches 51, 52, 53, 54,55 peuvent être plates et comportent chacune deux bras d'entraînement 511, 521, 531, 541, 551 qui s'étendent radialement vers l'extérieur. Les bras d'entraînement 511, 521, 531, 541 ,551 sont reliés ensemble par un rivet de liaison 61. Les bras d'entraînement 511, 521, 531, 541 ,551 sont pourvus d'un trou circulaire dans lequel le rivet de liaison 61 est inséré. A titre d'illustration, les cinq couches 511, 521, 531, 541, 551 présentent ici une épaisseur de 1,2 mm et peuvent être réalisées dans un acier ayant une dureté superficielle comprise entre 420 et 475 HV.

Comme illustré dans deuxième mode de réalisation de l'invention de la figure 5, le voile 5 peut comprendre trois couches 51, 52, 53 de géométries identiques. Les trois couches 51, 52, 53 peuvent être plates et comportent chacune deux bras d'entraînement 511, 521, 531 qui s'étendent radialement vers l'extérieur. Les bras d'entraînement 511, 521, 531 sont reliés ensemble par une soudure 62, notamment une soudure par résistance ou soudure par point. Sur la figure 5, la soudure 62 est représentée schématiquement pour symboliser une zone affectée thermiquement suite au contact avec les électrodes du procédé de soudage. A titre d'illustration, les trois couches 511, 521, 533 présentent ici une épaisseur de 1,5 mm et peuvent être réalisées dans un acier ayant une dureté superficielle comprise entre 405 et 463 HV.

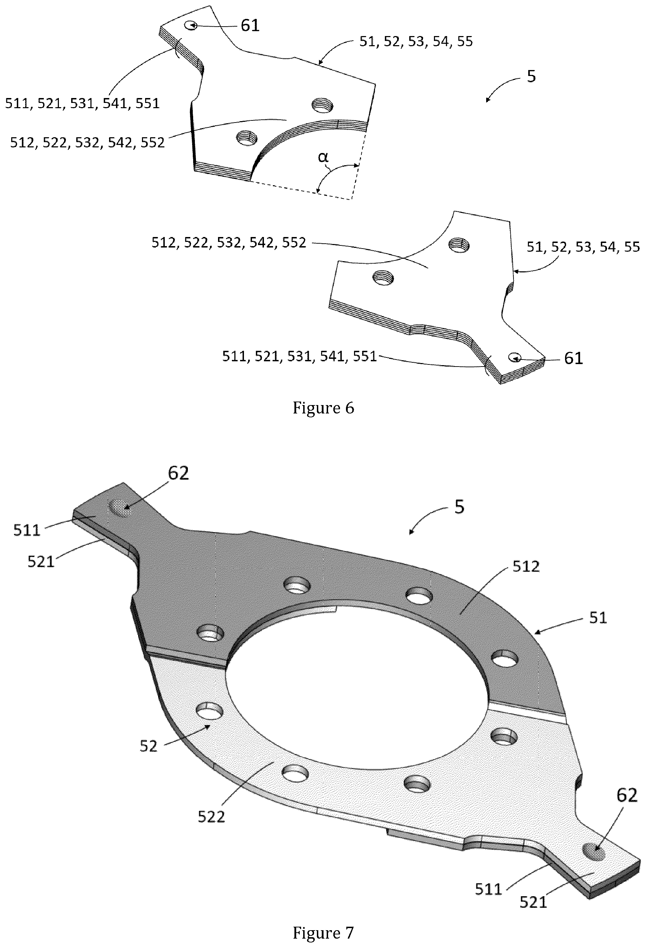

Comme illustré dans le troisième mode de réalisation de l'invention de la figure 6, le voile 5 peut comprendre des couches 51, 52, 53, 54, 55 chacune segmentées circonférentiellement en segments. Les segments des couches 51, 52, 53, 54, 55 peuvent chacun s'étendre circonférentiellement sur un premier angle α compris entre 15° et 220°. Ici, le voile 5 peut comprendre cinq couches 51, 52, 53, 54, 55 identiques, plates, et segmentées en deux segments et comportant chacune deux bras d'entraînement 511, 521, 531, 541, 551. Les segments de chaque couche sont distincts et peuvent être fixés séparément par paquets sur le volant d'inertie secondaire 3. Les bras d'entraînement 511, 521, 531, 541, 551 de chaque paquet sont reliés ensemble par un rivet de liaison 61.

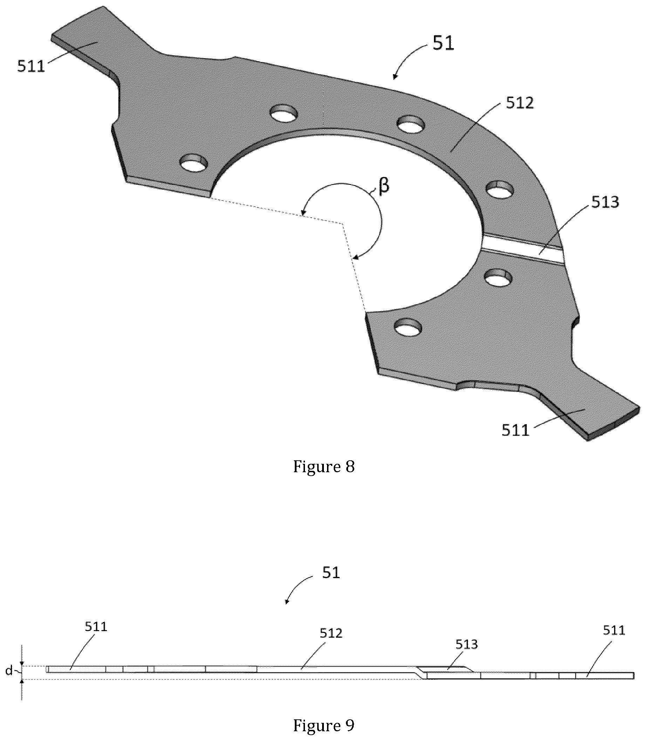

Comme illustré dans le quatrième mode de réalisation de l'invention des figures 7 à 9, le voile 5 peut comprendre deux couches 51, 52 qui chacune s'étendent circonférentiellement sur un deuxième angle β compris entre 195° et 270°. Les deux premiers bras d'entrainement 511 de la première couche 51 peuvent être décalés axialement entre eux d'une distance axiale d, et les deux deuxièmes bras d'entrainement 521 peuvent être décalés axialement entre eux de la même distance axiale d, de sorte que la première couche 51 et la deuxième couche 52 peuvent être imbriquées axialement. Un pliage 513 peut être aménagé pour former le décalage axial correspondant à la distance axiale d dans la première couche 51 et dans la deuxième couche 52. La distance axiale d peut être égale à l'épaisseur de la tôle à partir de laquelle peuvent être réalisées la première couche 51 et la deuxième couche 52, permettant ainsi que la première zone de connexion 512 et la deuxième zone de connexion 522 soient sur un même plan pour faciliter la fixation du voile 5 sur l'élément d'entrée de sortie de couple 3. Avantageusement, les couches 51 et 52 peuvent être de géométrie identiques.

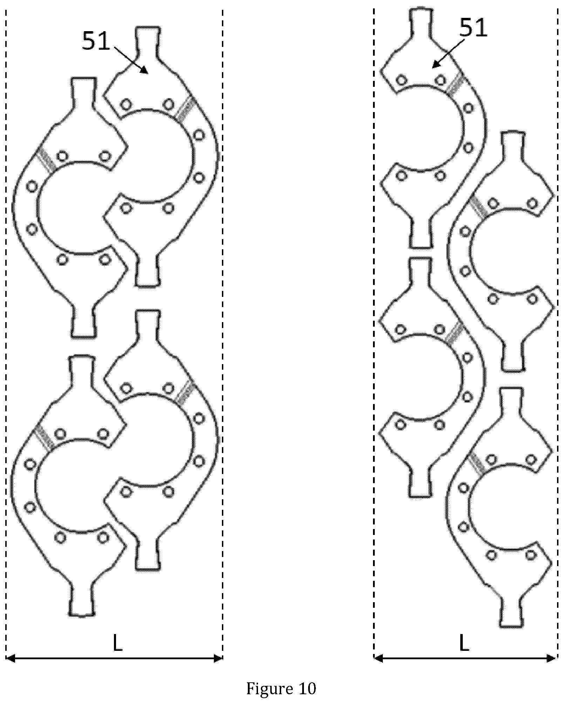

La figure 10 illustre la possibilité de réduire la quantité de matière mise en œuvre pour la fabrication du voile 5 dans le quatrième mode de réalisation de l'invention. La couche 51 qui s'étend circonférentiellement sur un deuxième angle β compris entre 195° et 270° peut permettre d'optimiser la position relative de plusieurs couches 51 dans une bande de tôle dans laquelle elles sont découpées afin de limiter la largeur L de ladite bande de tôle ainsi que de réduire des chutes de matière occasionnées.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

L'usage du verbe « comporter », « comprendre » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Amortisseur de torsion (1) pour dispositif de transmission de couple, notamment pour une chaîne de transmission de véhicule, l'amortisseur de torsion (1) comprenant :
- un élément d'entrée de couple (2) et un élément de sortie de couple (3) mobiles en rotation l'un par rapport l'autre autour d'un axe de rotation (X) ;
- des organes élastiques (4) couplant élastiquement en rotation l'élément d'entrée de couple (2) à l'élément de sortie de couple (3) ; et
- un voile (5) configuré pour coopérer en rotation avec les organes élastiques (4), le voile (5) comprenant une pluralité de couches (51, 52) empilées axialement, la pluralité de couches comprenant une première couche (51) comportant au moins deux premiers bras d'entraînement (511) et une deuxième couche (52) comportant au moins deux deuxièmes bras d'entraînement (521), les au moins deux premiers bras d'entraînement (511) et les au moins deux deuxièmes bras d'entraînement (521) s'étendant radialement pour se positionner circonférentiellement entre deux organes élastiques (4) ;
**caractérisé en ce que** les au moins deux premiers bras d'entraînement (511) sont reliés avec les au moins deux deuxièmes bras d'entraînement (521) par un moyen de liaison (6), le moyen de liaison (6) étant positionné radialement de telle sorte qu'une surface cylindrique circulaire ayant pour axe de révolution l'axe de rotation (X) traverse à fois le moyen de liaison (6) et les organes élastiques (4), et
la première couche (51) comporte en outre une première zone de connexion (512) et la deuxième couche (52) comporte en outre une deuxième zone de connexion (522), la première zone de connexion (512) et la deuxième zone de connexion (522) étant configurées pour être fixées sur l'élément d'entrée de couple (2) ou sur l'élément de sortie de couple (3).

2. Amortisseur de torsion (1) selon la revendication 1, dans lequel le moyen de liaison (6) est une liaison par rivetage (61).

3. Amortisseur de torsion (1) selon la revendication 1, dans lequel le moyen de liaison (6) est une liaison par soudage (62), notamment une liaison par soudage par résistance électrique ou par soudage laser, notamment par soudage laser par transparence.

4. Amortisseur de torsion (1) selon l'une quelconque des revendications précédentes, dans lequel la première couche (51) et la deuxième couche (52) sont en acier ayant subi un traitement de durcissement, notamment un traitement de durcissement permettant d'obtenir une dureté superficielle de 300 à 800 HV.

5. Amortisseur de torsion (1) selon l'une quelconque des revendications précédentes, dans lequel la première couche (51) et la deuxième couche (52) sont chacune réalisées à partir d'une tôle d'acier d'épaisseur constante, notamment une tôle d'acier ayant une épaisseur constante comprise entre 0,8 et 3 mm.

6. Amortisseur de torsion (1) selon l'une quelconque des revendications précédentes, dans lequel le nombre de couches (51, 52) est compris entre 2 et 7.

7. Amortisseur de torsion (1) selon l'une quelconque des revendications précédentes, dans lequel la première couche (51) et la deuxième couche (52) sont segmentées circonférentiellement en une pluralité de segments, chaque segment s'étendant circonférentiellement sur un premier angle (α), notamment un premier angle (α) compris entre 15° et 220°.

8. Amortisseur de torsion (1) selon l'une quelconque des revendications 1 à 6, dans lequel la première couche (51) et la deuxième couche (52) s'étendent circonférentiellement sur un deuxième angle (β) compris entre 195° et 360°, de préférence sur un deuxième angle (β) compris entre 195° et 270°.

9. Amortisseur de torsion (1) selon l'une quelconque des revendications précédentes, dans lequel la première couche (51) et la deuxième couche (52) sont plates.

10. Amortisseur de torsion (1) selon l'une quelconque des revendications 1 à 8, dans lequel les au moins deux premiers bras d'entrainement (511) sont décalés axialement entre eux d'une distance axiale (d), et les au moins deux deuxièmes bras d'entrainement (521) sont décalés axialement entre eux de ladite distance axiale (d), de sorte que la première couche (51) et la deuxième couche (52) sont imbriquées axialement.

11. Amortisseur de torsion (1) selon l'une quelconque des revendications précédentes, dans lequel la première couche (51) et la deuxième couche (52) sont de géométrie identique.

12. Amortisseur de torsion (1) selon l'une quelconque des revendications précédentes, dans lequel la pluralité de couches (51, 52) empilées axialement sont liées ensemble par le moyen de liaison (6) distinctement et indépendamment de l'élément d'entrée de couple (2) et de l'élément de sortie de couple (3).

13. Amortisseur de torsion (1) selon l'une quelconque des revendications précédentes, dans lequel la première zone de connexion (512) et la deuxième zone de connexion (522) sont axialement en contact et sont fixées ensemble sur l'élément de sortie de couple (3).

14. Amortisseur de torsion (1) selon l'une quelconque des revendications précédentes, ledit amortisseur de torsion (1) étant un double volant amortisseur comprenant :
- une masse primaire comportant l'élément d'entrée de couple (2) sous la forme d'un volant d'inertie primaire destiné à être entrainé en rotation par un arbre menant ;
- une masse secondaire comportant le voile (5) et l'élément de sortie de couple (3) sous la forme d'un volant d'inertie secondaire ou d'un moyeu apte à coopérer, directement ou via un embrayage, avec un arbre mené ; et
- les organes élastiques (4), sous la forme d'une pluralité de ressorts couplant élastiquement en rotation la masse primaire et la masse secondaire.

15. Dispositif de transmission de couple, notamment pour une chaîne de transmission de véhicule, comprenant un amortisseur de torsion (1) selon l'une des revendications précédentes et un embrayage.
